# EUROPEAN PATENT SPECIFICATION

(11) **EP 0 649 815 B1**
(45) Date of publication and mention of the grant of the patent: **29.04.1998**
(21) Application number: 94307827.9
(22) Date of filing: 25.10.1994
(51) Int. Cl.: C01B 31/08, C01B 31/12, F02B 43/00, F17C 11/00

(54) **Highly microporous carbons and process of manufacture**
Hochmicroporöse Kohlenstoffe und Verfahren zu ihrer Herstellung
Carbones hautement microporeux et leur procédé de fabrication

(30) Priority: 25.10.1993 US 143551; 16.05.1994 US 243155; 20.10.1994 US 324837; 20.10.1994 US 324838; 20.10.1994 US 324839
(43) Date of publication of application: 26.04.1995
(73) Proprietor: WESTVACO CORPORATION, New York New York 10171 (US)
(72) Inventor: Baker, Frederick S., Wando, South Carolina 29492 (US); Beckler, Robert K., Lexington, Virginia 24450 (US); Miller, James R., Mt. Pleasant, South Carolina 29464 (US); Yan, Zhiquan Quentin, Mt. Pleasant, South Carolina 29464 (US)
(74) Representative: Thomson, Paul Anthony

(56) References cited:
- EP-A- 0 216 599
- EP-A- 0 366 796
- EP-A- 0 467 486
- DE-C- 502 040
- FR-A- 2 336 347
- GB-A- 2 223 223

## Description

### BACKGROUND OF THE INVENTION

### (1) Field of the Invention

The present invention is directed to the improved production of activated carbon. More particularly, it is directed to the production of highly microporous activated carbon. Specifically, the present invention is directed to the production of highly microporous activated carbon from an activated carbon material by a subsequent chemical activation process employing an alkali, such as potassium hydroxide. One use of such activated carbon is in the adsorption of gaseous hydrocarbon fuels, including natural gas.

### (2) Description of the Prior Art

Practical storage of gaseous hydrocarbon fuels, such as natural gas which is comprised primarily of methane, for such uses as a vehicle fuel and the like involves portable containerization of the gas. Natural gas, in particular, is a leading contender for use as an alternative fuel for automobiles, particularly in areas designated as "zero emission" zones under the 1990 Clean Air Act. The majority of natural gas vehicles operating in the United States use compressed natural gas at pressures of up to 3600 psi. However, low pressure storage systems are being developed in which natural gas is contained in storage containers packed with adsorbent material to achieve near-liquid methane density. The storage containers may be formable or nonformable tanks, cylinders, or other closed vessels. Economic evaluations by the natural gas industry indicate that adsorbed natural gas (ANG) would be comparable economically with compressed natural gas (CNG) at a deliverable gas capacity of 150 volumes of gas per container (cylinder) volume (v/v) at a storage pressure of 35150 kg/m² [500 psi](measured at 25°C).

Natural gas, which is primarily methane, is adsorbed in pores and on surfaces of the adsorbent medium. Under such conditions, the adsorbed gas assumes properties not unlike those of its liquid state. Typical adsorbents are solids with pores and fissures throughout their structure. Methane molecules preferentially adsorb in pores having a diameter of about 10-15 Angstroms (Å). The carbon material of the present invention may also be suitable for storage of other gases of a similar molecular size.

Active carbon has long been used for removal of impurities and recovery of useful substances from liquids and gases because of its high adsorptive capacity. Generally, "activation" refers to any of the various processes by which the pore structure is enhanced. Typical commercial activated carbon products exhibit a surface area (as measured by nitrogen adsorption as used in the B.E.T. model) of at least 300 m²/g. For the purposes of this disclosure, the terms "active carbon" and "activated carbon" are used interchangeably. Typical activation processes involve treatment of carbon sources-such as resin wastes, coal, coal coke, petroleum coke, lignites, polymeric materials, and lignocellulosic materials including pulp and paper, residues from pulp production, wood (like wood chips, sawdust, and wood flour), nut shell (like almond shell and coconut shell), kernel, and fruit pits (like olive and cherry stones)-either thermally (with an oxidizing gas) or chemically (usually with phosphoric acid or metal salts). Such activated carbons maintain the original macrostructure of the starting material and, therefore, a similar pore distribution of micropores of less than 20Å in width, mesopores of 20Å to 500Å (divided between small mesopores of 20Å to less than 50Å in width and large mesopores of 50Å to 500Å in width), and macropores of greater than 500Å in width.

As the surface area of an active carbon is directly proportional to the carbon's microporosity and since the methane adsorption capacity of an active carbon is enhanced by increasing its volume of micropores (less than 20Å in width) and small mesopores (20-50Å in width), as a percentage of total pore volume, activation methods are sought which are pore size specific. In particular, micropores in the range of from above 8Å to about 20Å are suitable for adsorption of methane. More particularly, pore sizes of from about 10Å to about 20Å in width are preferred for methane adsorption. Most preferred are pore sizes of from about 10Å to about 15Å. Therefore, carbon materials are desirable which are comprised of a high volume (*e.g*., greater than 50%) of pores less than 16Å in width as a percentage of total pore volume. Such materials which are comprised of a higher volume (*e.g*., greater than 80%) of pores less than 20Å in width as a percentage of total pore volume also are desirable. Also desirable are such materials comprised of an extremely high volume (*e.g.*, greater than 95%) of pores less than 50Å in width as a percentage of total pore volume.

Citing disclosures of potassium hydroxide (KOH) activation of coal in U.S. Patent Nos. 3,764,561 and 4,082,694, the patentees of U.S. 4,769,359 teach the production of active carbon which enables high adsorption of gases per unit volume by treating coal with a liquid mixture comprising KOH and sodium hydroxide (NaOH) and subsequently carbonizing at 500°-800°C. A method of producing activated carbon with a large surface area and a low sulfur content also is taught in U.S. 5,064,805 by mixing coconut shell char with melted potassium hydroxide hydrate at a temperature sufficiently high to cause activation. Also, U.S. 4,082,694 teaches solid KOH activation of specific carbonaceous feeds including coal, coal coke, and petroleum coke to produce cage-like microporous structures particularly useful for water purification.

Chemical activation of wood-based carbon with phosphoric acid (H₃PO₄) is disclosed in U.S. Patent No. Re. 31,093 to improve the carbon's decolorizing and gas adsorbing abilities. Also, U.S. 5,162,286 teaches phosphoric acid activation of wood-based material which is particularly dense and which contains a relatively high (30%) lignin content, such as nut shell, fruit stone, and kernel. Zinc chloride (ZnCl₂) also is a common chemical activation agent. Phosphoric acid activation of lignocellulose material also is taught in U.S. 5,204,310 as a step in preparing carbons of high activity and high density.

Also, U.S. 4,769,359 teaches producing active carbon by treating coal cokes and chars, brown coals or lignites with a mixture of NaOH and KOH and heating to at least 500°C in and inert atmosphere. U.S. 5,102,855 discloses making high surface area activated carbon by treating newspapers and cotton linters with phosphoric acid or ammonium phosphate. Coal-type pitch is used as a precursor to prepare active carbon by treating with NaOH and/or KOH in U.S. 5,143,889. Finally, U.S. 5,292,706 teaches storing natural gas under pressures of 1400 to 4500 kPa using a carbon sieve adsorbent made by impregnating a polymer precursor of the carbon molecular sieve with additional monomers and polymerizing the monomers before carbonizing the precursor.

None of these activated carbons, however, achieve the desired objective of providing 150 v/v of deliverable gas capacity at 35150 kg/m² [500 psi] Such a carbon is herein taught to be produced either by a two-step chemical activation process, beginning with a non-activated carbon precursor, or a single chemical activation process, beginning with an active carbon precursor. In an embodiment of the two-step process a lignocellulosic material is first activated with phosphoric acid and then activated with potassium hydroxide under thermal conditions. While permitting small scale, laboratory production of the desired carbon material, the two-stage process is less than efficient for commercial production to avail the product to public use. A commercial scale volume of the wet carbon material, upon blending with activating agent solution, presents material handling problems. Also, the batch nature of the lab-scale process, combined with the requirement of a relatively long duration of thermal treatment with gradual incremental temperature increases, precludes efficient, economical production rates. In addition, it was discovered that the lab-initially developed process leaves residual potassium which adversely impacted the highly microporous carbon's performance.

Therefore, the objective of this invention is to provide a highly microporous activated carbon capable of meeting the industry target for a deliverable capacity of a gaseous hydrocarbon fuel stored on activated carbon. It is also an objective of this invention to provide a highly microporous active carbon material that is specific for storage of methane in natural gas to provide a deliverable capacity of 150 v/v of the methane at 35150 kg/m² [500 psi](at 25°C). Another objective of the present invention is to provide an efficient process for manufacturing the highly microporous carbon. It is a further objective of this invention to provide a method for storing natural gas at low pressure using the invention highly microporous activated carbon.

According to the present invention there is provided a microporous activated carbon characterized by greater than 50% of the total pore volume comprising pores in the range of greater than 8Å up to 20Å in width and greater than 95% of the total pore volume comprising pores up to 50Å in width, wherein the carbon is derived from lignocellulose material.

Also in accordance with the present invention there is provided a process for the manufacture of highly microporous activated carbon comprising the steps of forming a blend of an active carbon material and an alkali solution at a ratio of from 0.5:1 to 5:1, on a dry weight basis, pre-drying the wet blend to a moisture content of below about 25%, heat treating the blend at from 650° to 1100°C, and acid washing and drying the microporous activated carbon product.

Further in accordance with the present invention there is provided a process for storing gaseous hydrocarbon fuel in a storage container comprising filling the storage container with activated carbon material prior to filling with the natural gas wherein the activated carbon is characterized by greater than 50% of the total pore volume comprising pores in the range of greater than 8Å up to 20Å in width and greater than 95% of the total pore volume comprising pores up to 50Å in width.

In the preferred embodiment of the invention, the active carbon material is the product of phosphoric acid activation of a lignocellulosic material and the alkali activation agent is potassium hydroxide. The micropore volume and pore size distribution of the activated carbon so obtained are such that the products are useful for adsorbed natural gas storage. Additionally, the adsorption properties of the activated carbon according to the present invention permit its use in applications such as fractionation of hydrocarbons, purification of industrial gases, anti-pollution devices, liquid-phase purification processes in food and chemical industries, water treatment, liquid-phase recovery and separation, catalysts or catalyst supports, batteries, analysis, and medicinal uses, among others.

### DETAILED DESCRIPTION OF THE PREFERRED EMBODIMENT(S)

Phosphoric acid is a popular chemical activation/carbonization agent, but at temperatures above about 300°C polymerization of the acid creates wide pores that are not useful for methane adsorption. Other chemical activation agents, such as zinc chloride, do not produce pores of the size particularly favorable for methane adsorption. It is known from the prior art that initial activation of carbonaceous precursors with alkali appears to produce micropores of the pore size hypothesized as being favorable for methane adsorption, i.e., about 11-12Å width, but necessary pore volume is not produced and product yield is often inadequate. The benefit of employing alkali as a subsequent activation agent is to exploit the merits of different activation agents, while eliminating adverse effects. In the two-stage H₃PO₄/KOH activation process disclosed in U.S. Patent No. 5,416,056, wood is blended with phosphoric acid (1st stage) at an acid to wood ratio of from about 0.5:1 to about 3:1, preferably from about 1:1 to about 2:1. Next, the blend is heated at carbonization temperatures, and the acid is removed from the system. The activated product of the first stage then is chemically activated further by blending with potassium hydroxide at a KOH to char ratio of about 0.5:1 to 4:1, preferably about 1:1 to 2.5:1, at higher temperatures (2nd stage) to yield a product suitable for natural gas storage. The first stage carbonization temperature is from about 150° to about 590°C, and the second stage higher activation temperature is from about 650° to about 980°C. After cooling, the highly microporous active carbon is washed with water to remove residual potassium from the carbon and dried. Experience with the above process has proved that removing potassium from the small pores of the carbon to a residual level of below 1 wt% was very time consuming when using only water. It has been discovered that by incorporating an acid wash step, followed by a pH adjustment step (if necessary for specific product end uses), the total wash time was reduced significantly, while obtaining less than 0.1 wt% residual potassium. Other improvements also have been discovered which form the present invention.

Significantly, the improved process of the present invention differs from that disclosed in U.S. Patent No. 5,416,056 in that the activated carbon material for KOH activation does not have to have been activated by phosphoric acid. In fact, the activated carbon material can be the product of another chemical activation agent or the product of thermal or other activation process. Also, the improved process of the present invention differs from that disclosed in U.S. Patent No. 5,416,056 in that the activated carbon is not restricted to lignocellulosic material and the second stage activation agent can be selected from alkalies in general. For the purposes of the present disclosure, the term "alkali" refers broadly to the hydroxides and carbonates of alkali metals and alkaline earth metals, as well as the bicarbonate and hydroxide of the radical ammonium and combinations thereof, but preferably the hydroxides and carbonates of sodium and potassium and combinations thereof. The activated carbon material for the alkali activation may also be derived from other than lignocellulosic material, as noted in an example below.

Nevertheless, the most preferred activated carbon material for the invention process is a wood-based activated carbon such as Westvaco's commercial product, WV-A 1100, which is a product with a pore size distribution tailored to the capture of evaporative gasoline emissions and produced under H₃PO₄ activation.

Alternatively, other examples of activated carbonaceous material suitable for subsequent alkali activation according to the invention are the high butane working capacity (BWC) carbons (and methods of their preparation) reported in U.S. Patent Nos.: 5,204,310; 5,206,207; 5,238,470; and 5,250,491.

Basically, the invention includes a subsequent alkali activation of activated carbon materials.

### Alkali Activation

In addition to a broader range of activated carbon materials and activants, a most significant improvement over the KOH activation step disclosed in U.S. Patent No. 5,416,056 is the provision of continual material throughput with a short residence time over the previous time consuming batch thermal activation stage. A granular WV-A 1100 product is blended with a solution of alkali at a alkali/activated carbon ratio of 0.5:1-5:1 (dry weight basis). The wet blend material is pre-dried in conventional drying equipment such as a tray drier, a fluidized bed dryer, a rotary kiln drier, or a blender drier. Drying is effected in a hot gas atmosphere and preferably in a hot inert atmosphere.

The pre-dried, moist carbon (preferably, ∼10% moisture content) is activated in a continuous rotary kiln comprising a heated section and a cooling section. The heated section is designed to raise the carbon temperature to from about 650°-1100°C for from 5-40 minutes, preferably 8-15 minutes. The cooking section, preferably with a N₂ purge, permits reducing the activated carbon temperature prior to washing.

The cooled activated char, which is alkaline, is washed first with water to reduce the potassium level, after which the active carbon material is washed with acid water of a pH of 1.5-5.0 to reduce the potassium level to less than 0.5%, preferably less than 0.2%, and most preferably less than 0.1%. Finally, a neutral water wash is employed to rinse the carbon.

After the rinsed carbon is allowed to drain, it is dried. A multi-shelf cart oven may be employed for drying. More detailed embodiments of the invention process are set forth in the following examples.

### Example 1

A product of the first stage-phosphoric acid activation, or granular, 10x25 mesh WV-A 1100 product, was treated as stated above. It was blended with a KOH solution at a KOH/C ratio of 1.8:1 (dry basis) in a fluidizing blender/dryer and dried for 28 minutes (to achieve the target moisture of 10%, wet basis). Because the dried blend was less tacky (versus the process without pre-drying), material yield across this process step increased from 82 to 98% (db), and the earlier need to wash out the blender between batches was eliminated.

Thermal treatment of the pre-dried KOH/C blend was carried out under a nitrogen atmosphere in an indirect-fired, continuous pilot rotary kiln. Firing of the kiln was maintained throughout the production run, and feed was continuous with only two interruptions. Kiln rotational speed was 1.2 rpm, resulting in a residence time of 10 minutes. The nominal feed rate of dried, alkaline blend was 27kg/hr (60 lb/hour). Largely because of limitations on control of feed screw speed, production rate of (activated) alkaline char varied between about 14.2 and 18.7 kg/hr (36 and 46 lb/hour) and averaged 17.35 kg/hr (43 lb/hour)(db). A total of 2700kg (6000 lb)(db) of KOH/C blend was fed to the activatiou kiln.

The washing procedure, which extracted potassium salts from the alkaline char, was carried out in a 836 dm³ (220-gallon)tank. Each batch of alkaline char 180-225kg (400-500 lb) was washed in about seven hours, which matches activation kiln output at a nominal feed rate of 27kg/hr (60 lb/hour). The drying step was carried out as described previously in a convection drying oven. Properties produced by the process are set forth in the following tables. Table I shown surface area and pore size distribution data.

**TABLE I**

| PRODUCT PROPERTY | SURFACE AREA AND PORE SIZE DISTRIBUTION OF PRODUCT | | | | |
|---|---|---|---|---|---|
| | A | B | C | D | Avg |
| Surface Area (m²g⁻¹) | 2368 | 2372 | 2366 | 2352 | 2365 |
| Pore Volume (cc/g): < 20Å Width | 0.84 | 0.84 | 0.86 | 0.83 | 0.84 |
| < 50Å Width | 1.12 | 1.12 | 1.12 | 1.12 | 1.12 |
| < 1000Å Width | 1.15 | 1.15 | 1.14 | 1.14 | 1.15 |

The BET nitrogen surface areas of the product averaged 2365 m²g⁻¹. Micropore volume for less than 20Å pore widths averaged 0.84 cc/g, as determined using the BJH method of pore size analysis.

Table II describes the methane adsorption properties of the invention example products:

**TABLE II**

| Sample | METHANE CAPACITY DATA | | | | |
|---|---|---|---|---|---|
| | MWC (v/v) | MTC (v/v) | Me.Act (wt%) | Density (g/cc) | Retentivity (%) |
| E | 154 | 174 | 18.5 | 0.532 | 13 |
| F | 153 | 173 | 18.8 | 0.518 | 13 |
| G | 154 | 174 | 17.8 | 0.553 | 13 |
| H | 153 | 175 | 18.6 | 0.533 | 14 |
| I | 153 | 172 | 18.4 | 0.527 | 12 |
| J | 153 | 174 | 19.1 | 0.512 | 13 |
| K | 151 | 171 | 18.2 | 0.530 | 13 |
| L | 154 | 174 | 18.6 | 0.528 | 13 |
| M | 154 | 174 | 19.3 | 0.505 | 13 |
| N | 155 | 173 | 19.0 | 0.513 | 12 |
| O | 154 | 173 | 19.5 | 0.500 | 13 |
| Average: | 153 | 173 | 18.7 | 0.523 | 13 |

The methane capacity data shown in Table II demonstrate that the invention process can be tightly controlled to produce consistent product. The methane working capacity of the product averaged 153 v/v, meeting the target of 150 v/v. Total capacity averaged 173 v/v; weight activity averaged 18.7 wt%); methane retentivity averaged 13%; and packed density averaged 0.523 g/cc).

Table III shows the trace metals levels of the highly microporous carbon products.

**TABLE III**

| Sample | TRACE K LEVELS (wt%) |
|---|---|
| | K |
| E | 0.01 |
| F | 0.03 |
| G | 0.01 |
| H | 0.01 |
| I | 0.01 |
| J | 0.01 |
| K | 0.01 |
| L | 0.01 |
| M | 0.01 |
| N | 0.01 |
| O | 0.02 |
| Average: | 0.01 |

Residual potassium levels were consistently near 0.01 wt%.

### Example 2

To substantiate the resultant pore size re-distribution as a result of invention treatment of the lignocellulosic material, a sample product of the disclosed process was analyzed for pore size distribution by the Density Functional Theory (DFT) using argon adsorption data, a procedure known to those skilled in the art. The results of the analysis are reported in Table IV.

**TABLE IV**

| Pore Width (Å) | % of Total (< size) |
|---|---|
| 4.1 | 0.0 |
| 4.4 | 0.7 |
| 5.1 | 10.4 |
| 5.9 | 15.1 |
| 6.8 | 18.6 |
| 8.0 | 27.6 |
| 9.3 | 37.3 |
| 10.0 | 37.8 |
| 10.8 | 43.8 |
| 11.7 | 49.6 |
| 12.7 | 52.6 |
| 13.7 | 56.3 |
| 14.7 | 61.6 |
| 15.9 | 65.7 |
| 17.3 | 71.3 |
| 18.6 | 76.9 |
| 20.1 | 81.9 |
| 21.7 | 86.5 |
| 23.4 | 90.1 |
| 25.2 | 93.0 |
| 29.4 | 96.5 |
| 50.4 | 99.5 |
| 100.5 | 99.8 |
| 1004.0 | 100.0 |

These data show that greater than 50% the total pore volume is comprised of pores >8Å to 20Å in width (81.9 - 27.6). Also, the data show that >80% of the total pore volume is comprised of pores less than 20Å in width. Finally, the data show that >98% of the total pore volume is comprised of pores less than 50Å in width.

### Example 3

A commercially available coconut-based activated carbon product, G210R, was treated as described in the parent application (SN' 551). The granular product was blended with a solution of KOH at a KOH/carbon ratio of 2:1 (dry weight basis). The impregnated carbon was loaded into a stainless steel retort of an indirect-fired rotary kiln. The temperature of the bed was increased from near ambient to 870°C (1600°F) over a period of 4 hours. An inert atmosphere in the retort was maintained by a flow of nitrogen gas. The free-flowing, granular product was removed from the kiln, cooled to an ambient temperature, and washed with water at 82°C (180°F.) The product was dried at 128°C (230°F) in a convection oven.

The surface area and pore size distribution data for the precursor activated carbon and the KOH-activated product, respectively, are recorded in Table V. These data demonstrate that both the surface area and the volume of very small pores, i.e., <50Å width, are substantially increased as a result of performing a second stage of activation of the coconut-based activated carbon with KOH.

### Example 4

A commercially available coal-based activated carbon product, F-400 was activated with KOH in a manner similar to that described above in Example 3.

The surface area and pore size distribution data for the precursor activated carbon and the KOH-activated product, respectively, are recorded in Table V. These data demonstrate that both the surface area and the volume of very small pores, i.e., <50Å width, are substantially increased as a result of performing a second stage of activation of the coal-based activated carbon with KOH.

**TABLE V**

| PRODUCT PROPERTIES | INFLUENCE OF KOH ACTIVATION ON PORE VOLUME OF COCONUT AND COAL-BASED ACTIVATED CARBON PRODUCTS | | | |
|---|---|---|---|---|
| | Coconut Carbon | | Coal Carbon | |
| | Precursor | Product | Precursor | Product |
| Surface Area (m²g⁻¹) | 1211 | 1974 | 991 | 1528 |
| Pore Volume(cc/g)*: <16Å Width | 0.36 | 0.40 | 0.28 | 0.32 |
| <20Å Width | 0.47 | 0.65 | 0.36 | 0.49 |
| <50Å Width | 0.57 | 0.95 | 0.46 | 0.74 |
| <1000Å Width | 0.59 | 0.98 | 0.59 | 0.87 |

| | | | | |
|---|---|---|---|---|
| * Determined by the BJH method | | | | |

### Example 5

A commercially available wood-based activated carbon product, WV-A 1100, was blended with a solution of KOH at a KOH/carbon ratio of 2:1 (dry weight basis). The impregnated carbon was loaded into a stainless steel retort of an indirect-fired rotary kiln. The temperature of the bed was increased from near ambient to 870°C (1600°F) over a period of 4 hours and held at 870°C (1600°F) for a period of 1 hour. An inert atmosphere in the retort was maintained by a flow of nitrogen gas. The free-flowing, granular product was removed from the kiln, cooled to ambient temperature, and washed with water at 82°C (180°F). The product was dried at 128°C (230°F) in a convection oven.

The surface area and pore size distribution data for the precursor activated carbon and the KOH-activated product, respectively, are recorded in Table VI. These date demonstrate that the volume of very small pores, i.e., <50Å width is substantially increased as a result of performing a second stage of activation of the wood-based activated carbon with KOH. In particular, the micropore volume, i.e., <20Å width, is greatly increased by almost 150%.

### Example 6

A commercially available wood-based activated carbon product, WV-A 1100, was blended with a solution of NaOH at a NaOH/carbon ratio of 2:1 (dry weight basis). The impregnated carbon was loaded into a stainless steel retort of an indirect-fired rotary kiln. The temperature of the bed was increased from near ambient to 870°C (1600°F) over a period of 4 hours. An inert atmosphere in the retort was maintained by a flow of nitrogen gas. The free-flowing, granular product was removed from the kiln, cooled to ambient temperature, and washed with water at 82°C (180°F) in a convection oven.

The surface area and pore size distribution data for the precursor activated carbon and the NaOH-activated product, respectively, are recorded in Table VI. These data demonstrate that volume of very small pores, i.e., <50Å width, is substantially increased as a result of performing a second stage of activation of the wood-based activated carbon with NaOH.

**TABLE VI**

| PRODUCT PROPERTIES | INFLUENCE OF KOH AND NaOH ACTIVATION, RESPECTIVELY, ON PORE VOLUME OF WOOD-BASED ACTIVATED CARBON | | | |
|---|---|---|---|---|
| | KOH | | NaOH | |
| | Precursor | Product | Precursor | Product |
| Surface Area (m²g⁻¹) | 2294 | 2312 | 1556 | 1917 |
| Port Volume(cc/g)*: <16Å Width | 0.13 | 0.62 | 0.06 | 0.28 |
| <20Å Width | 0.38 | 0.91 | 0.19 | 0.54 |
| <50Å Width | 1.24 | 1.07 | 0.87 | 0.94 |
| <1000Å Width | 1.59 | 1.09 | 1.20 | 0.98 |

| | | | | |
|---|---|---|---|---|
| * Determined by the BJH method | | | | |

It is noteworthy also that the granular nature of the precursor essentially is preserved by using the process described herein. This is in marked contrast to the KOH activation processes as previously described in reference to U.S. 4,082,694, U.S. 5,064,805, and U.S. 5,143,889 for the KOH-activation of carbonaecous precursors, which produce a low density, small particle size product that is difficult to handle, both during processing and in use.

Subsequent activation with KOH of lignocellulose-base, phosphoric acid carbonized/activated carbons also reduced the total residual phosphate content of the carbons. Although this effect was not surprising, the magnitude of the reduction was startling and, indeed, unexpected. The total residual phosphate content of the carbon was reduced from 5.3% to 0.01%. To place this finding in perspective, the lowest total residual phosphate content previously known to be obtained by washing and thermally post-treating a wood-based carbon was about 0.5%. Bearing in mind that some of the surface oxides of wood-based carbons are associated with the residual phosphate content of the carbon, the surface chemistry of the KOH-activated carbon may be significantly different from that of the lignocellulose-based carbon activated with phosphoric acid alone. For example, the carbon should be more hydrophobic (less polar), which in itself could favor methane adsorption.

In summary, subsequent activation of activated an carbon material with KOH at high temperature shifts the pore size distribution of the carbon to a range favorable for methane adsorption. The micropore volume of the carbon is greatly enhanced to a level not previously obtained. In the examples cited here, this generally resulted in a deliverable gas storage capacity of ≥150 v/v at 35150 kg/m² (500 psi). The granular nature of the precursor is retained following activation with KOH.

While the invention has been described and illustrated herein by references to various specific materials, procedures and examples, it is understood that the invention is not restricted to the particular materials, combination of materials, and procedures selected for that purpose. Numerous variations of such details can be employed, as will be appreciated by those skilled in the art.

## Claims

1. A microporous activated carbon characterized by greater than 50% of the total pore volume comprising pores in the range of greater than 8Å up to 20Å in width and greater than 95% of the total pore volume comprising pores up to 50Å in width, wherein the carbon is derived from lignocellulose material.

2. A microporous activated carbon as claimed in claim 1, further characterized by greater than 25% of the total pore volume comprising pores of 10Å to 16Å in width, greater than 70% of the total pore volume comprising pores less than 20Å and greater than 98% of the total pore volume comprising pores less than 50Å in width.

3. A microporous activated carbon as claimed in claim 1 or 2, characterized in that the lignocellulose material is selected from wood chips, sawdust, wood flour, paper, cotton linters, coconut shell, nut shells, and fruit pits.

4. A microporous activated carbon as claimed in claim 1, 2 or 3, further characterized by a total pore volume of at least 0.8 cc/g.

5. A microporous activated carbon as claimed in claim 4, further characterized by a total pore volume of at least 1.0 cc/g.

6. A process for the manufacture of highly microporous activated carbon comprising the steps of forming a blend of an active carbon material and an alkali solution at a ratio of from 0.5:1 to 5:1, on a dry weight basis, pre-drying the wet blend to a moisture content of below about 25%, heat treating the blend at from 650° to 1100°C, and acid washing and drying the microporous activated carbon product.

7. A process as claimed in claim 6, characterized in that the ratio of alkali solution to active carbon material in the blend is from 1:1 to 3:1, the alkali solution is selected from potassium hydroxide, sodium hydroxide, potassium carbonate, and sodium carbonate, the heat treatment is conducted at from 650° to 980°C, and the microporous activated carbon is characterized by greater than 50% of the total pore volume comprising pores of less than 16Å in width, greater than 80% of the total pore volume comprising pores of less than 20Å in width, and greater than 98% of total pore volume comprising pores of less than 50Å in width.

8. A process as claimed in claim 7, characterized in that the active carbon material is derived from a material selected from coal, peat, pitch, polymeric materials and lignocellulose material.

9. A process as claimed in claim 8, characterized in that the lignocellulosic material is selected from wood chips, sawdust, wood flour and coconut shell.

10. A process as claimed in any one of claims 6 to 9, characterized in that the alkali is recovered in the washing step of the alkali activation and recycled for use in forming the wet blend.

11. A process as claimed in claim 10, characterized in that the alkali solution is potassium hydroxide and the highly microporous active carbon product is characterized by greater than 70% of total pore volume comprising pores less than 20Å in width and greater than 95% of total pore volume comprising pores less than 50Å in width.

12. A process as claimed in claim 11, characterized in that the highly microporous active carbon product is further characterized by greater than 50% of the total pore volume comprising pores of less than 16Å in width, greater than 80% of the total pore volume comprising pores of less than 20Å in width, and greater than 98% of total pore volume comprising pores of less than 50Å in width.

13. A process for storing gaseous hydrocarbon fuel in a storage container comprising filling the storage container with activated carbon material prior to filling with the natural gas wherein the activated carbon is characterized by greater than 50% of the total pore volume comprising pores in the range of greater than 8Å up to 20Å in width and greater than 95% of the total pore volume comprising pores up to 50Å in width.

14. A process as claimed in claim 13, characterized in that the storage container is a low pressure storage container, the natural gas is stored at a pressure of about 35150 kg/m² (500 psi) and the filled storage container is capable of delivering at least 150 v/v of natural gas.

15. A process as claimed in claim 14, characterized in that the carbon is further characterized by greater than 25% of the total pore volume comprising pores of 10Å to 16Å in width, greater than 70% of the total pore volume comprising pores less than 20Å, and greater than 98% of the total pore volume comprising pores less than 50Å in width.

16. A process as claimed in claim 13, 14 or 15, characterized in that the activated carbon material is derived from coal, peat, pitch, polymeric materials and lignocellulosic materials.

17. A process as claimed in claim 16, characterized in that the lignocellulosic material is selected from wood chips, sawdust, wood flour and coconut shell.

18. A process as claimed in any one of claims 13 to 17, characterized in that the storage container is selected from a conformable or noncomformable tank, a cylinder and a vessel.

19. A process as claimed in any one of claims 13 to 18, characterized in that the gaseous hydrocarbon fuel is selected from natural gas, methane, and other hydrocarbon gases.

## Patentansprüche

1. Mikroporöse Aktivkohle, dadurch gekennzeichnet, dass mehr als 50% des gesamten Porenvolumens aus Poren mit einer Breite in der Größenordnung von mehr als 8Å bis 20Å und mehr als 95% des gesamten Porenvolumens aus Poren mit einer Breite von bis zu 50Å bestehen, wobei die Kohle von Lignocellulosematerial abstammt.

2. Mikroporöse Aktivkohle nach Anspruch 1, dadurch gekennzeichnet, dass mehr als 25% des gesamten Porenvolumens aus Poren mit einer Breite von 10Å bis 16Å, mehr als 70% des gesamten Porenvolumens aus Poren mit weniger als 20Å und mehr als 98% des gesamten Porenvolumens aus Poren mit einer Breite von weniger als 50Å bestehen.

3. Mikroporöse Aktivkohle nach Anspruch 1 oder 2, dadurch gekennzeichnet, dass das Lignocellulosematerial aus Holzspänen, Sägemehl, Holzstaub, Papier, Baumwoll-Linters, Kokosnussschale, Nusschalen und Obstkernen ausgewählt wird.

4. Mikroporöse Aktivkohle nach Anspruch 1, 2 oder 3, gekennzeichnet durch ein gesamtes Porenvolumen von mindestens 0,8 cc/g.

5. Mikroporöse Aktivkohle nach Anspruch 4, gekennzeichnet durch ein gesamtes Porenvolumen von mindestens 1,0 cc/g.

6. Verfahren zur Herstellung hochmikroporöser Aktivkohle, bestehend aus den Schritten der Bildung einer Mischung eines Aktivkohlematerials und einer alkalischen Lösung in einem Verhältnis von 0,5:1 bis 5:1 auf Trockengewichtsbasis, des Vortrocknens der feuchten Mischung bis zu einem Feuchtigkeitsgehalt von unter etwa 25%, der Wärmebehandlung der Mischung bei 650° bis 1100°C, und des Säurewaschens und Trocknens des mikroporösen Aktivkohleprodukts.

7. Verfahren nach Anspruch 6, dadurch gekennzeichnet, dass das Verhältnis der alkalischen Lösung zu dem Aktivkohlematerial in der Mischung zwischen 1:1 und 3:1 liegt, dass die alkalische Lösung aus Kaliumhydroxid, Natriumhydroxid, Kaliumcarbonat und Natriumcarbonat ausgewählt wird, dass die Wärmebehandlung bei 650° bis 980°C durchgeführt wird und dass die mikroporöse Aktivkohle dadurch gekennzeichnet ist, dass mehr als 50% des gesamten Porenvolumens aus Poren mit einer Breite von weniger als 16Å, mehr als 80% des gesamten Porenvolumens aus Poren mit einer Breite von weniger als 20Å und mehr als 98% des gesamten Porenvolumens aus Poren mit einer Breite von weniger als 50Å bestehen.

8. Verfahren nach Anspruch 7, dadurch gekennzeichnet, dass das Aktivkohlematerial von einem Material abstammt, das aus Kohle, Torf, Pech, polymerischen Materialien und Lignocellulosematerial ausgewählt wird.

9. Verfahren nach Anspruch 8, dadurch gekennzeichnet, dass das Lignocellulosematerial aus Holzspänen, Sägemehl, Holzstaub und Kokosnusschale ausgewählt wird.

10. Verfahren nach einem der Ansprüche 6 bis 9, dadurch gekennzeichnet, dass das Alkali in der Wasch-Stufe der Alkaliaktivierung zurückgewonnen und zur Verwendung bei der Bildung der feuchten Mischung wieder in den Kreislauf zurückgeführt wird.

11. Verfahren nach Anspruch 10, dadurch gekennzeichnet, dass die alkalische Lösung Kaliumhydroxid ist und dass das hochmikroporöse Aktivkohleprodukt dadurch gekennzeichnet ist, dass mehr als 70% des gesamten Porenvolumens aus Poren mit einer Breite von weniger als 20Å und mehr als 95% des gesamten Porenvolumens aus Poren mit einer Breite von weniger als 50Å bestehen.

12. Verfahren nach Anspruch 11, dadurch gekennzeichnet, dass das hochmikroporöse Aktivkohleprodukt dadurch gekennzeichnet ist, dass mehr als 50% des gesamten Porenvolumens aus Poren mit einer Breite von weniger als 16Å, mehr als 80% des gesamten Porenvolumens aus Poren mit einer Breite von weniger als 20Å und mehr als 98% des gesamten Porenvolumens aus Poren mit einer Breite von weniger als 50Å bestehen.

13. Verfahren zur Speicherung gasförmigen Kohlenwasserstoff-Kraftstoffes in einem Speicherbehälter, bei dem der Speicherbehälter mit Aktivkohlematerial gefüllt wird, bevor er mit dem Naturgas gefüllt wird, wobei die Aktivkohle dadurch gekennzeichnet ist, dass mehr als 50% des gesamten Porenvolumens aus Poren mit einer Breite in der Größenordnung von mehr als 8Å bis 20Å und mehr als 95% des gesamten Porenvolumens aus Poren mit einer Breite von bis zu 50Å bestehen.

14. Verfahren nach Anspruch 13, dadurch gekennzeichnet, dass der Speicherbehälter ein Niederdruck-Speicherbehälter ist, dass das Naturgas mit einem Druck von etwa 35150 kg/m² (500 psi) gespeichert wird, und dass der gefüllte Speicherbehälter in der Lage ist, mindestens 150 v/v Naturgas zu liefern.

15. Verfahren nach Anspruch 14, dadurch gekennzeichnet, dass die Kohle dadurch gekennzeichnet ist, dass mehr als 25% des gesamten Porenvolumens aus Poren mit einer Breite von 10Å bis 16Å, mehr als 70% des gesamten Porenvolumens aus Poren mit weniger als 20Å und mehr als 98% des gesamten Porenvolumens aus Poren mit einer Breite von weniger als 50Å bestehen.

16. Verfahren nach Anspruch 13, 14 oder 15, dadurch gekennzeichnet, dass das Aktivkohlematerial von Kohle, Torf, Pech, polymerischen Materialien und Lignocellulosematerialien abstammt.

17. Verfahren nach Anspruch 16, dadurch gekennzeichnet, dass das Lignocellulosematerial aus Holzspänen, Sägemehl, Holzstaub und Kokosnussschale ausgewählt wird.

18. Verfahren nach einem der Ansprüche 13 bis 17, dadurch gekennzeichnet, dass der Speicherbehälter ausgewählt wird aus einem konformen oder nicht-konformen Tank, einem Zylinder und einem Hohlgefäß.

19. Verfahren nach einem der Ansprüche 13 bis 18, dadurch gekennzeichnet, dass der gasförmige Kohlenwasserstoff-Kraftstoff aus Naturgas, Methan und anderen Kohlenwasserstoffgasen ausgewählt wird.

## Revendications

1. Carbone activé microporeux, caractérisé en ce qu'un volume supérieur à 50 % du volume total de pores est constitué par des pores ayant une largeur comprise entre plus de 8 Å et 20 Å et qu'un volume supérieur à 95 % du volume total de pores est constitué par des pores d'une largeur allant jusqu'à 50 Å, dans lequel le carbone est dérivé d'un matériau lignocellulosique.

2. Carbone activé microporeux selon la revendication 1, caractérisé en outre en ce qu'un volume supérieur à 25 % du volume total de pore est constitué par des pores d'une largeur comprise entre 10 Å et 16 Å, qu'un volume supérieur à 70 % du volume total de pores est constitué par des pores d'une largeur inférieure à 20 Å, et qu'un volume supérieur à 98 % du volume total de pores est constitué par des pores d'une largeur inférieure à 50 Å.

3. Carbone activé microporeux selon la revendication 1 ou la revendication 2, caractérisé en outre en ce le matériau lignocellulosique est choisi parmi des copeaux de bois, de la sciure, de la farine de bois, du papier, des bourres de coton, des coques de noix de coco, des coquilles de noix et des noyaux de fruits.

4. Carbone activé microporeux selon l'une des revendications 1, 2 et 3, caractérisé en outre par un volume total de pores d'au moins 0,8 cc/g.

5. Carbone activé microporeux selon la revendication 4, caractérisé en outre par un volume total de pores d'au moins 1,0 cc/g.

6. Procédé pour la fabrication de carbone activé fortement microporeux comprenant les étapes suivantes : former un mélange d'un matériau carboné actif et d'une solution alcaline avec un rapport compris entre 0,5:1 et 5:1, sur une base de poids à sec, présécher le mélange humide à une teneur en humidité inférieure à environ 25 %, traiter à chaud le mélange à une température comprise entre 650 et 1100°C et laver à l'acide et sécher le carbone activé microporeux ainsi produit.

7. Procédé selon la revendication 6, caractérisé en ce que le rapport de la solution alcaline au matériau carboné actif dans le mélange est compris entre 1:1 et 3:1, la solution alcaline est choisie parmi l'hydroxyde de potassium, l'hydroxyde de sodium, le carbonate de potassium et le carbonate de sodium, le traitement à chaud est conduit entre 650 et 980°C, et le carbone activé microporeux est caractérisé en ce qu'un volume supérieur à 50 % du volume total de pores est constitué par des pores d'une largeur inférieure à 16 Å, qu'un volume supérieur à 80 % du volume total de pores est constitué par des pores d'une largeur inférieure à 20 Å, et qu'un volume supérieur à 98 % du volume total de pores est constitué par des pores d'une largeur inférieure à 50 Å.

8. Procédé selon la revendication 7, caractérisé en ce que le matériau carboné actif est dérivé d'un matériau choisi parmi le charbon, la tourbe, la poix, des matériaux polymères et un matériau lignocellulosique.

9. Procédé selon la revendication 8, caractérisé en ce que le matériau lignocellulosique est choisi parmi les copeaux de bois, la sciure, la farine de bois et les coques de noix de coco.

10. Procédé selon l'une des revendications 6 à 9, caractérisé en ce que l'alcali est récupéré dans l'étape de lavage de l'activation par un alcali et est recyclé pour être utilisé pour former le mélange humide.

11. Procédé selon la revendication 10, caractérisé en ce que la solution d'alcali est l'hydroxyde de potassium et que le produit carboné actif fortement microporeux est caractérisé en ce qu'un volume supérieur à 70 % du volume total de pores est constitué par des pores d'une largeur inférieure à 20 Å, et qu'un volume supérieur à 95 % du volume total de pores est constitué par des pores d'une largeur inférieure à 50 Å.

12. Procédé selon la revendication 11, caractérisé en ce que le produit carboné actif fortement microporeux est en outre caractérisé en ce qu'un volume supérieur à 50 % du volume total de pores est constitué par des pores d'une largeur inférieure à 16 Å, qu'un volume supérieur à 80 % du volume total de pores est constitué par des pores d'une largeur inférieure à 20 Å, et qu'un volume supérieur à 98 % du volume total de pores est constitué par des pores d'une largeur inférieure à 50 Å.

13. Procédé pour stocker un combustible hydrocarboné gazeux dans un récipient de stockage, dans lequel on remplit le récipient de stockage avec un matériau carboné activé avant son remplissage par le gaz naturel, dans lequel le carbone activé est caractérisé en ce qu'un volume supérieur à 50 % du volume total de pores est constitué par des pores d'une largeur comprise entre plus de 8 Å et jusqu'à 20 Å et qu'un volume supérieur à 95 % du volume total de pores est constitué par des pores d'une largeur allant jusqu'à 50 Å.

14. Procédé selon la revendication 13, caractérisé en ce que le récipient de stockage est un récipient de stockage à basse pression, que le gaz naturel est stocké à une pression d'environ 35150 kg/m² (500 psi) et que le récipient de stockage rempli est capable de fournir au moins 150 v/v de gaz naturel.

15. Procédé selon la revendication 14, caractérisé en ce que le carbone est en outre caractérisé en ce qu'un volume supérieur à 25 % du volume total de pores est constitué par des pores d'une largeur comprise entre 10 Å et 16 Å, qu'un volume supérieur à 70 % du volume total de pores est constitué par des pores d'une largeur inférieure à 20 Å et qu'un volume supérieur à 98 % du volume total de pores est constitué par des pores d'une largeur inférieure à 50 Å.

16. Procédé selon l'une des revendications 13, 14 et 15, caractérisé en ce que le matériau carboné activé est dérivé du charbon, de la tourbe, de la poix, de matériaux polymères et de matériaux lignocellulosiques.

17. Procédé selon la revendication 16, caractérisé en ce que le matériau lignocellulosique est choisi parmi les copeaux de bois, la sciure, la farine de bois et les coques de noix de coco.

18. Procédé selon l'une des revendications 13 à 17, caractérisé en ce que le récipient de stockage est choisi parmi un réservoir conformable ou non conformable, un cylindre et un récipient.

19. Procédé selon l'une des revendications 13 à 18, caractérisé en ce que le combustible hydrocarboné gazeux est choisi parmi le gaz naturel, le méthane et d'autres hydrocarbures gazeux.
